# EUROPEAN PATENT SPECIFICATION

(11) **EP 4 579 908 B1**
(45) Date of publication and mention of the grant of the patent: **07.10.2026**
(21) Application number: 24836219.6
(22) Date of filing: 13.06.2024
(51) Int. Cl.: H01M 50/264, H01M 10/6568, H01M 10/613, H01M 10/6556, H01M 10/6557, H01M 50/209, H01M 50/244, H01M 10/63, H01M 10/6551, H01M 50/211, H01M 50/249, H01M 50/251, H01M 50/502

(54) **BATTERY PACK AND ENERGY STORAGE SYSTEM COMPRISING THE SAME**
BATTERIEPACK UND ENERGIESPEICHERSYSTEM DAMIT
BLOC-BATTERIE ET SYSTÈME DE STOCKAGE D'ÉNERGIE LE COMPRENANT

(30) Priority: 04.07.2023 KR 20230086642
(43) Date of publication of application: 02.07.2025
(73) Proprietor: LG Energy Solution, Ltd., Seoul 07335 (KR)
(72) Inventor: YU, Sang-Hyun, Daejeon 34122 (KR)
(74) Representative: BCKIP Part mbB
(86) International application number: PCT/KR2024/008168
(87) International publication number: WO 2025/009770

(56) References cited:
- EP-A1- 3 883 006
- CN-A- 114 914 613
- CN-U- 208 111 534
- CN-U- 216 793 808
- JP-A- 2018 078 234
- JP-A- 2021 125 379
- KR-A- 20140 061 212
- KR-B1- 101 799 537
- US-A- 5 981 101
- US-A1- 2020 373 533
- US-A1- 2022 223 965

## Description

### TECHNICAL FIELD

The present invention relates to a battery pack, and more particularly, to a battery pack having high density of arrangement of battery modules for improved space utilization.

### BACKGROUND

Due to being easily applicable to different types of products and having electrical properties such as high energy density, secondary batteries are commonly applied to not only portable devices but also electric vehicles (EVs) or hybrid electric vehicles (HEVs) that are powered by a source of electric power. Secondary batteries remarkably reduce the use of fossil fuels, and in addition to the primary advantage, they do not generate by-products from the use of energy. From this perspective, secondary batteries are seen as a new source of energy that is more environmentally friendly and energy-efficient.

The commonly used types of secondary batteries include lithium ion batteries, lithium polymer batteries, nickel cadmium batteries, nickel hydrogen batteries, nickel zinc batteries and so on, and a plurality of battery cells is connected in series or in parallel to form a battery module and a plurality of battery modules forms a battery pack.

Recently, attention is paid to an Energy Storage System (ESS) that stores the produced electricity in battery cells and supplies to consumers when electricity is needed, thereby maximizing energy use efficiency. The ESS is a system including a few tens to a few hundreds of battery racks, each battery rack including a plurality of battery modules. Additionally, the ESS is used in conjunction with an uninterrupted power supply (UPS) to stably supply the power in case of sudden power outage or failure and a solar power generation system that converts solar energy to electrical energy.

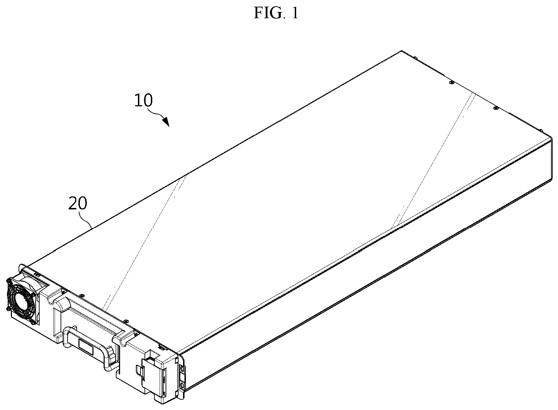

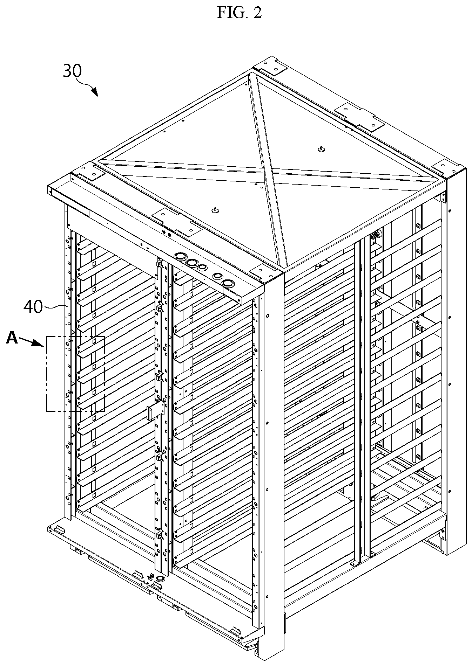

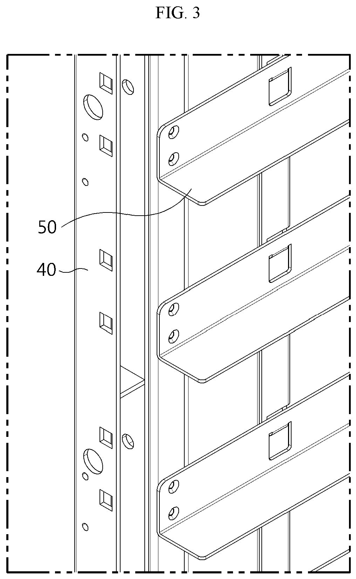

The battery rack generally includes a metal rack case to protect the plurality of battery modules from external impacts or receive and store them. FIG. 1 is a perspective view of the conventional battery module, FIG. 2 is a perspective view of the conventional rack case, and FIG. 3 is an enlarged view of section A in FIG. 2.

Referring to FIG. 1, the battery module 10 may include a module housing 20 and a plurality of battery cells (not shown) disposed in the module housing 20 and stacked in a direction.

Referring to FIGs. 2 and 3, the rack case 30 may be configured to accommodate a plurality of battery modules 10 shown in FIG. 1 arranged in the top-bottom direction. Inside the rack case 30, the plurality of battery modules 10 may be mounted, spaced apart from each other in the top-bottom direction. The rack case 30 may have an accommodation space having an open structure to allow the plurality of battery modules 10 to come and go in the top-bottom direction.

For example, as shown in FIGs. 2 and 3 in detail, the rack case 30 may form the accommodation space by a frame 40. Additionally, a support bracket 50 is coupled to the frame 40 and when the plurality of battery modules 10 is mounted in the rack case 30, the battery module 10 is supported by the support bracket 50 of the rack case 30 and mounted for each compartment. The battery module 10 received in each compartment needs the module housing 20, and the rack case 30 requires the frame 40 and the support bracket 50. In addition, the rack case 30 needs a spacing between the upper/lower support brackets 50.

As described above, the conventional battery rack requires many components, so the material cost increases, the assembly process of mounting the battery module 10 to every compartment of the rack case 30 is tedious, the rack case 30 is structurally complex and energy density is reduced as much as the space occupied by other components than the battery cells in each compartment of the rack case 30.

Accordingly, there is a need for a new high-density arrangement structure of the battery modules 10 to avoid the rise in material cost, simplify the assembly process, improve space utilization and increase energy density.

Document US 2022 / 0 223 965 A1 discloses a battery pack having a simplified structure and a method for manufacturing the battery pack. The battery pack includes: an upper case and a lower case; a battery module stack in which battery modules are stacked between the upper case and the lower case; a longitudinal square tube mounted on the battery module stack; a vertical square tube mounted on the battery module stack; and a horizontal square tube mounted on the battery module stack.

### DISCLOSURE OF THE INVENTION

### Technical Problem

The present invention is designed to address the above-described problem, and therefore the present invention is directed to providing a battery pack with reduced material cost, simplified structure and increased energy density.

The present invention is further directed to providing an energy storage system including the battery pack with simplified assembly process and increased energy density.

The technical problems to be solved by the present invention are not limited to the aforementioned problems, and these and other problems will be clearly understood by those skilled in the art from the following description.

### Technical Solution

To solve the above-described problem, the present invention provides a battery pack in accordance with claim 1.

According to the present invention, a battery pack includes a plurality of posts; a plurality of steel bars connecting the posts facing each other among the plurality of posts and assembled in multiple layers along a height direction of the posts; a plurality of trays situated on the steel bars to form each layer; and a plurality of cell module assemblies situated on the tray of each layer.

Here, the plurality of cell module assemblies situated on the tray of each layer may be connected to form one battery module, and the battery pack may further include an electrical connection member connecting the battery module of each layer.

In this instance, the battery modules are not covered with a module case, and the battery pack may further include a pack case to protect an internal structure.

The pack case may include a box-shaped container having an open top side.

Preferably, the trays are horizontally supported by the steel bars.

According to the present invention, the battery pack further includes a base plate that forms a bottom, and the plurality of posts are assembled to the base plate.

The posts are assembled to at least four corners of the base plate, and the steel bars connect the posts facing each other in a width direction of the battery pack and be arranged along a length direction of the battery pack.

The posts have holes at a predetermined interval along the height direction of the posts, and the steel bars are inserted into the holes and assembled between the posts facing each other.

The trays may include an upper surface and a sidewall extended downward from the upper surface, and the sidewall may have a recessed groove to fit downward to the steel bars.

The posts may be included in n rows and m columns along a width direction and a length direction of the battery pack, the steel bars may be assembled between the posts in a same column, and a bar-type top frame of a rectangular cross section may be fastened to a top of the posts in parallel to the steel bars.

The posts may have a rectangular cross section perpendicular to the height direction, and the steel bars may have a circular cross section.

Preferably, the battery pack further includes a heat sink between the trays and the cell module assemblies for each layer.

The battery pack may further include a cooling pipe assembly to supply a cooling medium to each heatsink and collect the cooling medium from each heatsink.

The cooling pipe assembly may be located at a front end of the battery pack in a length direction.

The cooling pipe assembly may include a cooling medium inlet port for feeding the cooling medium from outside of the battery pack, a cooling medium feed pipe connected to the cooling medium inlet port, an inlet-side connector connecting the cooling medium feed pipe to each heatsink, a cooling medium outlet port for discharging the cooling medium to outside of the battery pack, a cooling medium discharge pipe connected to the cooling medium outlet port and an outlet-side connector connecting the cooling medium discharge pipe to each heatsink.

The cooling medium inlet port and the cooling medium outlet port may be located at a top center of the front end of the battery pack in the length direction, and the battery pack may further include a Battery Management System (BMS) between the cooling medium feed pipe and the cooling medium discharge pipe.

The trays and the heatsinks may be extended to the front end of the battery pack in the length direction further than the cell module assemblies, and the inlet-side connector and the outlet-side connector may be located at the extended part of the heatsinks.

The cell module assemblies may be connected with an electrical connection member.

The battery pack may further include a top cover covering the cell module assemblies of an uppermost layer on the top frame.

For example, at a rear end of the battery pack in the length direction, a first electrical connection member extended from the cell module assemblies of a lowest layer may be connected to a first terminal portion of the top cover, and at the front end of the battery pack in the length direction, a second electrical connection member extended from the cell module assemblies of the uppermost layer may be extended below the top cover and connected to a second terminal portion of the top cover.

A battery pack according to another aspect of the present invention includes battery modules in multiple layers, each battery module in which trays supported by steel bars are stacked in multiple layers in a vertical direction, and a plurality of cell module assemblies situated on the trays of each layer is connected to each other.

Here, a number of layers of battery modules may be 4 to 6.

In addition, the present invention provides an energy storage system including at least one battery pack according to the present invention.

### Advantageous Effects

According to the present invention, because the battery modules are assembled into one pack, and the case is only equipped in each pack, the structure of the battery pack is simplified, energy density increases and the material cost reduces.

According to the present invention, the trays and the steel bars are arranged in multiple layers inside the battery pack, the cell module assemblies of each layer form one battery module and four to six battery modules form the battery pack. The battery pack has high density of arrangement of the battery modules, leading to improved space utilization.

According to the present invention, it is easy to manufacture the battery pack including a desired number of layers of battery modules, and free to expand battery capacity. The horizontal and vertical areas or footprint dimensions of the battery pack may be standardized, and it may be possible to freely expand in the height direction by increasing the number of layers of battery modules.

According to the present invention, the battery modules may be densely arranged in multiple layers inside the battery pack, so it is easy to design the energy storage system by arranging and stacking battery packs. Compared to the high density design of the conventional battery rack, it may be possible to minimize the assembly process.

According to the present invention, the internal structure of the battery pack may be stably supported by the posts, the trays and the pack case. Accordingly, it may be possible to minimize the movement of the internal structure such as the cell module assemblies in the battery pack, thereby reducing the influence on transportation (vibration). As described above, the battery pack of the present invention is simple and easy to transport and assemble at the installation site, and can achieve an energy storage system at a lower cost in a more straightforward and convenient way than a transportable rack system requiring a means for preventing deformation and damage to the components due to vibration during transportation.

### BRIEF DESCRIPTION OF THE DRAWINGS

The accompanying drawings illustrate exemplary embodiments of the present invention and together with the following detailed description, serve to provide a better understanding of the technical aspect of the present invention, and the present invention should not be construed as being limited to the drawings.
FIG. 1 is a perspective view of a conventional battery pack.
FIG. 2 is a perspective view of a conventional rack case.
FIG. 3 is an enlarged view of section A in FIG. 2.
FIG. 4 is a front perspective view showing a battery pack according to an embodiment of the present invention.
FIG. 5 is a perspective view showing a pack case separated from the battery pack of FIG. 4.
FIG. 6 is a perspective view showing an assembled state of a main internal structure of a battery pack according to an embodiment of the present invention.
FIG. 7 is an exploded perspective view of FIG. 6.
FIGs. 8 to 14 are diagrams illustrating a method for manufacturing a battery pack according to an embodiment of the present invention.
FIG. 15 is an exploded perspective view of another internal structure that is coupled to FIG. 6.
FIG. 16 is an exploded bottom perspective view of a top cover in FIG. 15.
FIG. 17 is a front enlarged view of FIG. 6.
FIG. 18 is a rear enlarged view of FIG. 6.
FIG. 19 is a diagram illustrating an energy storage system according to an embodiment of the present invention.

### DETAILED DESCRIPTION OF EXEMPLARY EMBODIMENTS

Hereinafter, the exemplary embodiments of the present invention will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the present invention on the basis of the principle that the inventor is allowed to define the terms appropriately for the best explanation. Therefore, the embodiments described herein and illustrations in the accompanying drawings are provided by way of illustration but not intended to be limiting.

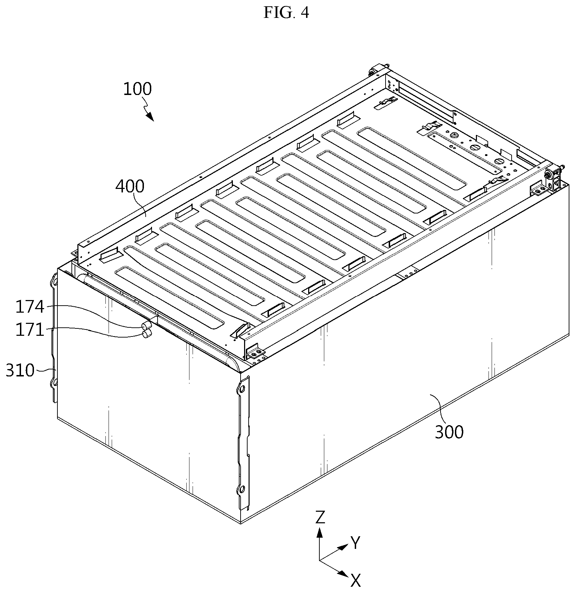

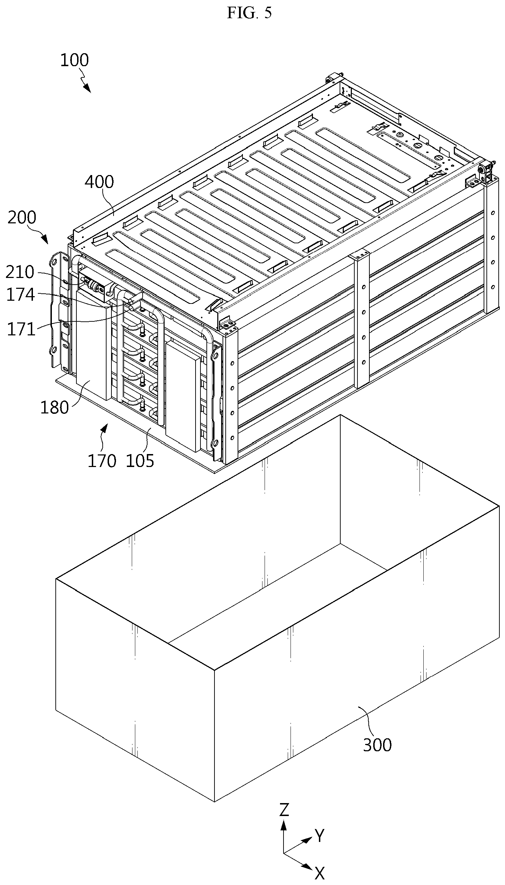

FIG. 4 is a front perspective view showing a battery pack according to an embodiment of the present invention, and FIG. 5 is a perspective view showing a pack case separated from the battery pack of FIG. 4.

Referring to FIGs. 4 and 5, the battery pack 100 according to an embodiment of the present invention includes the pack case 300 to protect an internal structure 200. The battery pack 100 may further include a top cover 400.

The pack case 300 may include a box-shaped container having an open top side. The pack case 300 may cover the front side, rear side, left side, right side and bottom side of the internal structure 200, and the top cover 400 may cover the upper surface of the internal structure 200.

The pack case 300 may be made of a material having stiffness of a predetermined level or more to protect the internal structure 200. Preferably, the pack case 300 may be made of a metal material having high thermal conductivity for easy heat release. For example, the pack case 300 may be made of aluminum or steel. Additionally, to achieve electrical insulation, the pack case 300 may further include an insulating coating layer on the inner surface.

The pack case 300 may further include a component for connection with other structure. For example, as shown, the pack case 300 may have a bracket 310 having a fastening hole at the front side. This component may be used to connect a plurality of battery packs 100, and may be used to connect a device or equipment in which the battery pack 100 is to be mounted, for example, a chassis of a vehicle or a frame of an energy storage system. The shape of the component may be modified and the component may be omitted.

The battery pack 100 has a predetermined size in a width direction (X axis direction, left-right direction), a length direction (Y axis direction, front-rear direction) and a height direction (Z axis direction, top-bottom direction), and has an approximately rectangular cuboidal structure in shape. The battery pack 100 may have a shape for preventing unnecessary space occupation when densely arranging a plurality of battery packs 100. Additionally, the pack case 300 is easy to manufacture due to its simple structure.

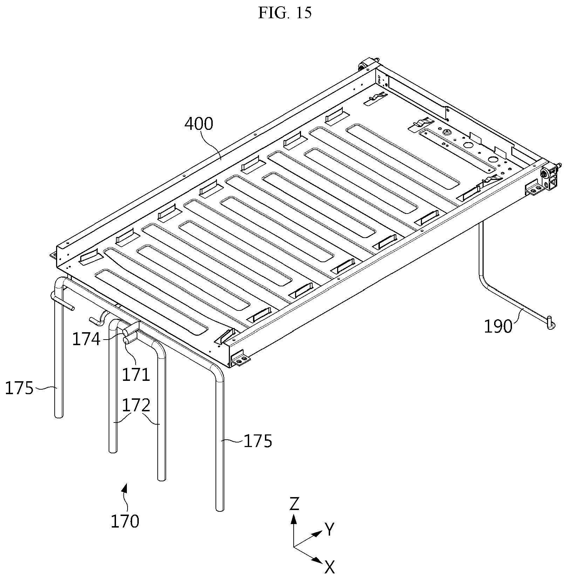

Meanwhile, FIG. 4 shows a cooling medium inlet port 171 and a cooling medium outlet port 174 outside of the pack case 300. The cooling medium inlet port 171 and the cooling medium outlet port 174 need to be in communication with the outside to supply a cooling medium from the outside of the battery pack 100 to the inside of the battery pack 100 and discharge the cooling medium to the outside of the battery pack 100, and by this reason, the cooling medium inlet port 171 and the cooling medium outlet port 174 are exposed to the outside of the pack case 300. A cooling pipe assembly 170 is connected to the cooling medium inlet port 171 and the cooling medium outlet port 174. The cooling related component structure is shown in FIGs. 15 to 17, and will be described in more detail with reference to FIGs. 15 to 17.

Additionally, as shown in FIG. 5, the battery pack 100 may further include a battery management system (BMS) 180 and a fuse assembly 210. The cooling pipe assembly 170, the BMS 180 and the fuse assembly 210 may be disposed together at the front end of the battery pack 100 without occupying unnecessary areas in the internal space of the battery pack 100 to prevent the decline in energy density of the battery pack 100. Because the cooling pipe assembly 170, the BMS 180 and the fuse assembly 210 are disposed together at the front end of the battery pack 100, the internal space of the pack case 300 may be primarily allocated to cell module assemblies. Accordingly, it may be possible to increase energy density of the battery pack 100.

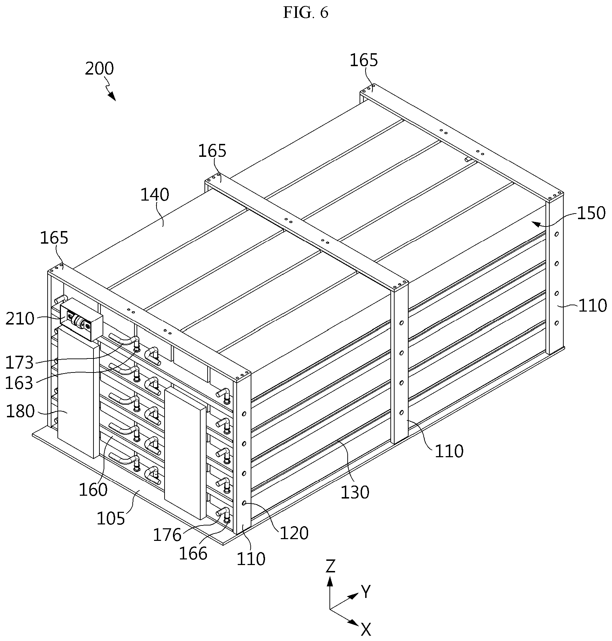

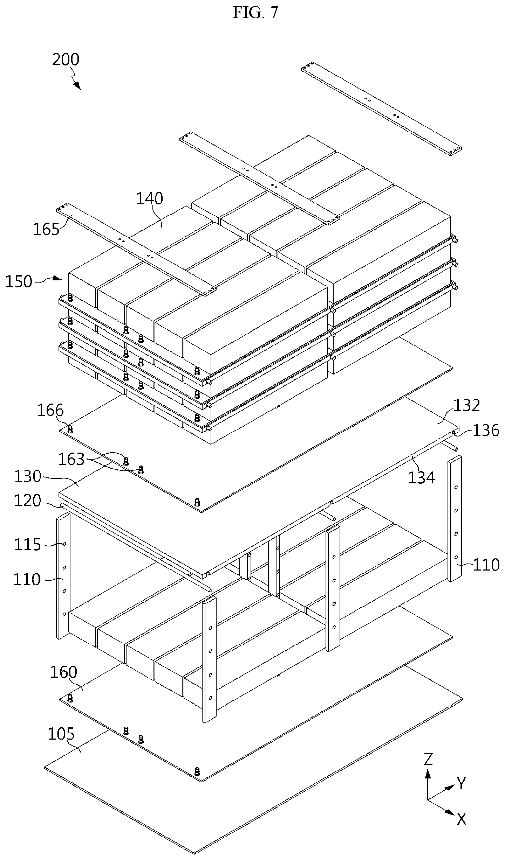

FIG. 6 is a perspective view showing the assembled state of the main internal structure of the battery pack according to an embodiment of the present invention, and FIG. 7 is an exploded perspective view of FIG. 6.

Describing the internal structure 200 of the battery pack 100 with reference to FIGs. 6 and 7, the battery pack 100 includes a plurality of posts 110 and a plurality of steel bars 120. The steel bars 120 are connected between the posts 110 facing each other among the plurality of posts 110. Additionally, the steel bars 120 are assembled in multiple layers along the height direction of the posts 110.

A tray 130 is situated on the steel bars 120 of one layer. The tray 130 includes a plurality of trays to form each layer. Preferably, the trays 130 are horizontally supported by the steel bars 120.

A plurality of cell module assemblies 140 is situated on the tray 130 of each layer. The posts 110 and the steel bars 120 may play a main framework role for situating the cell module assemblies 140. The posts 110, the steel bars 120 and the trays 130 may be designed not to occupy the larger volume than the cell module assemblies 140 in order to increase energy density of the battery pack 100.

The cell module assembly 140 is an assembly of battery cells. The plurality of battery cells may be arranged in a direction within the cell module assembly 140. The battery cells that constitute the cell module assembly 140 may include, for example, pouch-type battery cells. The pouch-type battery cells have a suitable shape for maximizing energy density when stacking them. However, the battery cells applied to the present invention are not limited to a particular shape, and may include battery cells of any shape, for example, prismatic cells or cylindrical cells so long as they correspond to rechargeable secondary batteries.

Additionally, the plurality of battery cells that constitutes the cell module assembly 140 may be stacked side by side. When pouch-type battery cells are applied, the battery cells in standing position such that a direction in which electrode leads are drawn faces Y axis direction may be arranged along the X axis direction to form the cell module assembly 140. For example, a cell module assembly 140 may include five or more battery cells. The plurality of battery cells may be electrically connected either in series or in parallel or both, and electrical connection may be established by connecting the electrode leads of the battery cells by a busbar.

The cell module assemblies 140 may be arranged in row and column on the tray 130. In the illustrated example, the cell module assemblies 140 having the length direction in Y axis direction are arranged in 5 rows in X axis direction, and the arrangement in a column is repeated in Y axis direction so they are arranged in 5 rows and 2 columns. According to the number of cell module assemblies 140 arranged, the size of the trays 130, the number and placement of posts 110, and the number of steel bars 120 may change to support proper loads.

Here, the plurality of cell module assemblies 140 situated on the tray 130 of each layer may be connected to form one battery module 150. That is, the cell module assemblies 140 horizontally placed on one layer may be modularized into one unit. Additionally, the battery module 150 of each layer may be connected to each other to form one pack. That is, connection between all the cell module assemblies 140 included in the battery pack 100 may be established by connecting from the battery module 150 of the lowermost layer to the battery module 150 of the uppermost layer. The connection between the cell module assemblies 140 and the connection between the battery modules 150 may be made by a proper electrical connection member such as a cable or a busbar.

The battery pack 100 of the present invention includes the trays 130 supported by the steel bars 120 and arranged in multiple layers in the vertical direction, the plurality of cell module assemblies 140 situated on the tray 130 of each layer is connected to form the battery module 150, and the battery modules 150 are included in multiple layers inside the battery pack 100. Here, for example, the number of layers of the battery modules 150 may be 4 to 6, and as shown, the number of layers of the battery modules 150 is 5.

As described above, the battery pack 100 includes the pack case 300 accommodating the battery modules 150 arranged in the top-bottom direction. In this instance, as opposed to the conventional art, the battery modules 150 are not covered by a module case, and are only covered by the pack case 300 as shown in FIG. 4. As described above, the present invention includes the battery modules 150 combined into one pack, omits a module case, and finally includes the case covering the entire structure only in the pack, so the structure of the battery pack 100 is simplified, energy density increases and the material cost reduces.

According to the present invention, the trays 130 and the steel bars 120 may be arranged in multiple layers inside the battery pack 100, the cell module assemblies 140 of each layer form one battery module 150, and four to six battery modules 150 may form the battery pack 100. The battery pack 100 has high density of arrangement of battery modules 150 without a module case, leading to improved space utilization.

Describing the internal structure 200 of the battery pack 100 in more detail with reference to FIGs. 6 and 7, the battery pack 100 includes a base plate 105 that forms the bottom of the internal structure 200. The plurality of posts 110 are assembled to the base plate 105. The base plate 105 is the base for making the posts 110 stand upright in the vertical direction and stacking the plurality of cell module assemblies 140 of the lowest layer.

The posts 110 are assembled to at least four corners of the base plate 105. The steel bars 120 connect the posts 110 facing each other in the width direction of the battery pack 100 and are arranged along the length direction of the battery pack 100.

Depending on the size of the base plate 105 or the placement and number of cell module assemblies 140 that will be mounted on the base plate 105, the number and assembly location of posts 110 may change. For example, the posts 110 may be included in n rows and m columns along the width direction and the length direction of the battery pack 100, and the steel bars 120 may be assembled between the posts 110 in the same column. In the illustrated example, the posts 110 are included in three columns, and three steel bars 120 in the horizontal plane are necessary.

A bar-type top frame 165 of a rectangular cross section may be fastened to the top of the posts 110 in parallel to the steel bars 120. The top frames 165 may be coupled to the top of the posts 110 on the cell module assemblies 140 of the uppermost layer by bolting, and the stack structure of the cell module assemblies 140 may be coupled with the left surface and the right surface in contact with the posts 110 and the upper surface in contact with the top frames 165. By this configuration, the stack structure of the cell module assemblies 140 may be safely maintained without movement.

The posts 110 have holes 115 arranged at a predetermined interval along the height direction of the posts 110, and the steel bars 120 are inserted into the holes 115 and assembled between the posts 110 facing each other.

In the illustrated example, four holes 115 may be arranged at a predetermined interval. When inserting the steel bar 120 into each hole 115, the total number of layers of the steel bars 120 may be four.

The steel bars 120 may have a greater length than the distance between the posts 110 facing each other, and two end portions of the steel bars 120 extended through the holes 115 may have an extended surface parallel to the outer surface of the posts 110, or further extended in X axis direction than the outer surface of the posts 110, and thus the steel bars 120 may be supported between the posts 110 reliably and stably.

The tray 130 may include an upper surface 132 and a sidewall 134 extended downward from the upper surface 132, and the sidewall 134 may have a recessed groove 136 into which the steel bars 120 are inserted downwards. Because of including the upper surface 132 and the sidewall 134, the weight may be reduced compared to a hexagonal plate as a whole, and forming the recessed groove 136 in the thin sidewall 134 rather than forming a long groove of a shape that will be fastened to the steel bars 120 may have a beneficial effect on production and material cost savings.

The posts 110 may have a rectangular cross section perpendicular to the height direction. The posts 110 may not occupy the large area in the internal space of the pack case 300, and may have a larger area of contact with the cell module assemblies 140.

The steel bars 120 may have a circular cross section. The holes 115 and the recessed grooves 136 may conform to the shape of the steel bars 120. When the steel bars 120 have a circular cross section, there is no need for a special alignment process when inserting the steel bars 120 into the holes 115, and it may be easy to fasten by allowing the steel bars 120 to pass through the holes 115 facing each other, thereby improving assembly efficiency. Additionally, because a portion of the steel bars 120 supporting the trays 130 is circular in shape, when the heavy cell module assemblies 140 are placed on the trays 130, loads are not concentrated on narrow areas, thereby maintaining structural strength.

The plurality of trays 130 form each layer. In the illustrated example, the number of layers of the trays 130 is 4. The base plate 105 at the bottom also form one layer. Accordingly, in this embodiment, the number of layers in which the cell module assemblies 140 may be situated is 5.

The plurality of cell module assemblies 140 is situated in each layer. The cell module assemblies 140 may be included in o rows and p columns in one layer along the width direction and the length direction of the battery pack 100. In the illustrated example, the cell module assemblies 140 are arranged in 5 rows and 2 columns, totaling 10 in one layer, and the total number of layers is 5, so the total number of the cell module assemblies 140 in the battery pack 100 amounts to 50. As the cell module assemblies 140 of each layer form one battery module 150, in the illustrated example, the number of layers of the battery modules 150 is 5.

According to the present invention, it is easy to manufacture the battery pack 100 including a desired number of layers of the battery modules 150, and free to expand battery capacity. The horizontal and vertical areas or footprint dimensions of the battery pack 100 may be standardized. The size of the battery pack 100 in the height direction and capacity may be freely expanded by increasing the number of layers of the battery modules 150.

The posts 110 may regulate the front-rear and left-right movement of one battery module 150 including the cell module assemblies 140 of one layer connected to each other. The trays 130 supported by the steel bars 120 may regulate the upward and downward movement of the battery modules 150. Accordingly, in the event of movement of the battery pack 100, the movement of the battery modules 150 in the pack case 300 may be prevented by the posts 110 and the trays 130. Because the battery modules 150 are very heavy, even a small movement has great influence on the surrounding component. According to the present invention, it may be possible to prevent the movement of the battery modules 150, thereby improving performance of the battery pack 100 and ensuring safe and long-term use of the battery pack 100.

Preferably, the battery pack 100 further includes a heat sink 160 between the tray 130 and the cell module assemblies 140 for each layer. Here, the heat sink 160 refers to an object that absorbs heat from another object and emits heat through direct/indirect thermal contact. The heat sink 160 may be provided for each battery module 150. The heat sinks 160 may be configured to cool the battery modules 150 by thermal contact with the battery modules 150. To this end, the heat sinks 160 may be made of metal having high heat conductivity and heat resistance. For example, the heat sinks 160 may be made of an aluminum alloy having light weight and high thermal conductivity.

The heat sinks 160 may release heat to ambient air (air) or the cooling medium passing through the heat sinks 160. For example, the cooling medium may be water or oil. This embodiment further includes the cooling pipe assembly 170 connected to the heat sinks 160 to make use of the cooling medium. To allow the cooling medium to circulate, for connection to the cooling pipe assembly 170, the heat sinks 160 may have an inlet port 163 and an outlet port 166, and the heat sinks 160 may have flow channels inside. As described in more detail below with reference to FIG. 15, etc., the cooling pipe assembly 170 may include an inlet-side connector 173 for connection to the inlet port 163 and an outlet-side connector 176 for connection to the outlet port 166 as shown in FIG. 6.

In the battery pack 100, the battery modules 150 may be mounted, spaced apart from each other in the top-bottom direction by the thickness of the trays 130 and the heat sinks 160. The trays 130 and the heat sinks 160 may be designed with minimal thickness. Through this, the plurality of battery modules 150 may be mounted with high density of arrangement without unnecessary space occupation in the top-bottom direction inside the battery pack 100.

Here, the posts 110 and the trays 130 may be included in the movement paths of heat during dissipation of heat generated from the battery modules 150, and be made of a material having high thermal conductivity to improve heat transfer efficiency.

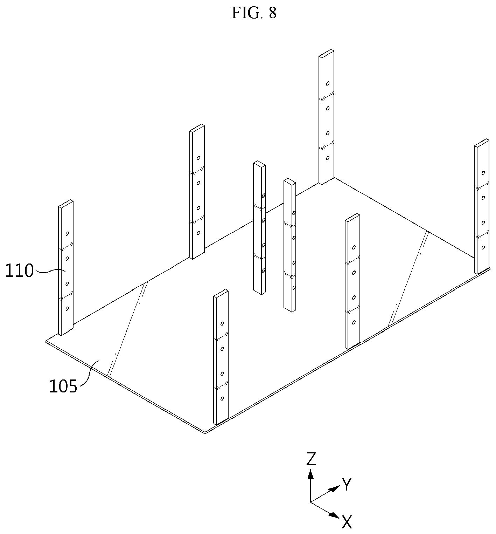

FIGs. 8 to 14 are diagrams illustrating a method for manufacturing the battery pack according to an embodiment of the present invention. Not only the method for manufacturing the battery pack 100 but also the detailed configuration of the battery pack 100 will be understood more clearly from the following description with reference to FIGs. 8 to 14.

Referring to FIG. 8, the posts 110 are assembled to the base plate 105 (step S1). The assembly between the base plate 105 and the posts 110 may be done by a variety of methods, for example, interference fitting, bolting, adhesion or welding.

As mentioned above, the posts 110 have a rectangular cross section, and are preferably disposed with the long axis in cross section facing the battery cell assemblies 140 to increase the area of contact with the battery cell assemblies 140. Additionally, this embodiment takes an example of the battery cell assembly 140 including the posts 110 arranged in rows and columns, for example, three columns. The number of posts 110 in the middle column may be larger than the number of posts 110 in another column to provide a stronger support.

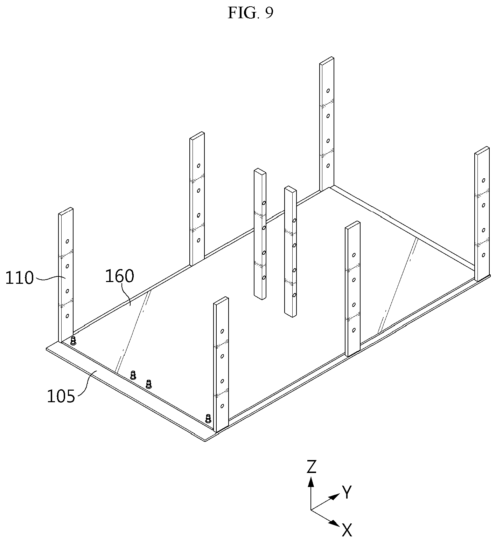

Subsequently, as shown in FIG. 9, the first heat sink 160 is situated on the base plate 105 (step S2). The heat sink 160 may be assembled after it has been moved downward from the top of the posts 110, and in the illustrated example, the heat sink 160 is formed with a structure that allows the middle posts 110 to pass through. The heat sink 160 may be disposed at two locations in one layer, avoiding the middle posts 110.

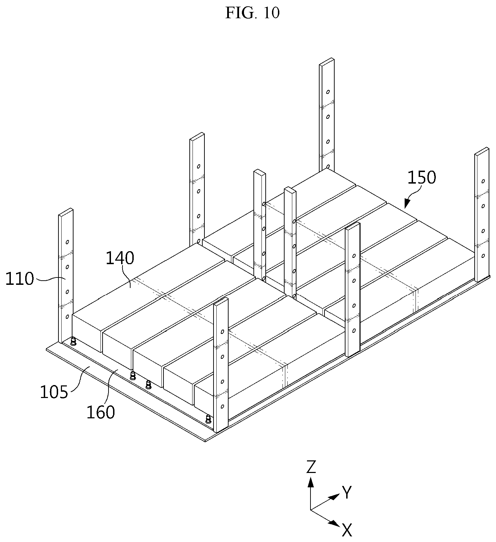

Subsequently, referring to FIG. 10, the plurality of cell module assemblies 140 is placed on the heat sink 160 (step S3). In this step, the cell module assemblies 140 may be electrically connected to form the battery module 150.

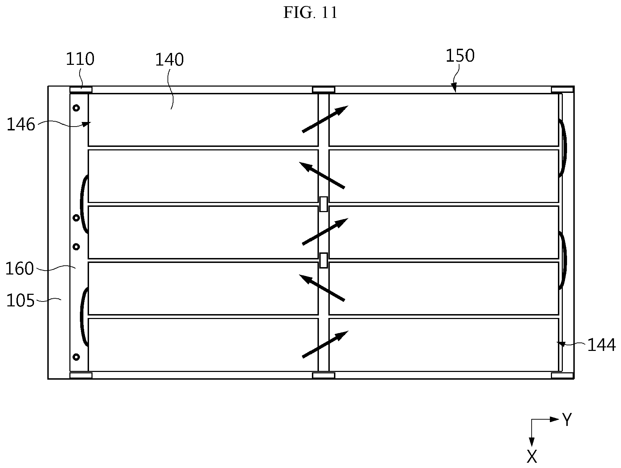

FIG. 11 is a top view of the assembled state of FIG. 10 to schematically show the electrical connection relationship. The cell module assemblies 140 placed on one layer may be connected by a proper electrical connection means. The direction of current flow between the cell module assemblies 140 may be, for example, as indicated by the arrow. One side 144 of a cell module assembly 140 may be connected to the cell module assembly of the upper layer, and one side 146 of another cell module assembly 140 may be connected to a terminal portion for connection to an external terminal.

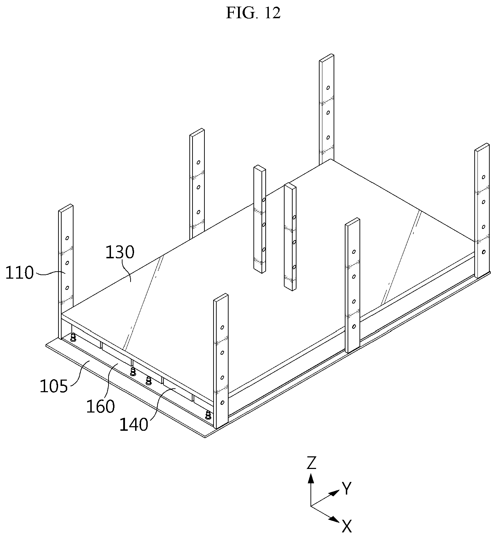

Subsequently, referring to FIG. 12, the steel bars 120 are assembled to the posts 110, and the tray 130 is situated thereon to support it (step S4).

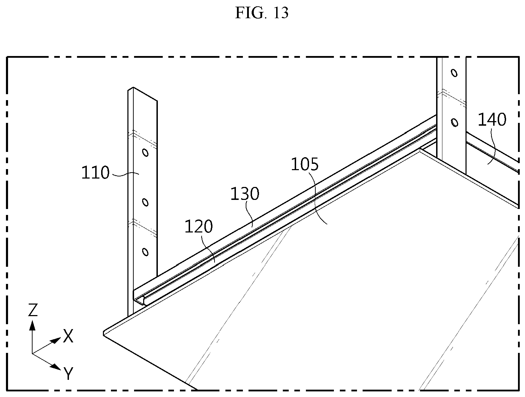

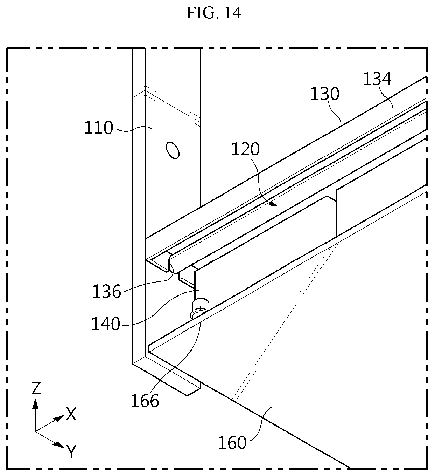

FIGs. 13 and 14 are enlarged views showing the assembly relationship between the steel bar and the tray.

As mentioned above, the tray 130 includes the upper surface 132, the sidewall 134 and the recessed groove 136. The tray 130 may be moved from top to bottom of the steel bars 120 and assembled so that the steel bars 120 are inserted into the recessed groove 136.

Subsequently, in the same way as the S2 described with reference to FIG. 9, the heat sink 160 is situated on the tray 130. Subsequently, in the same way as the step S3 described with reference to FIG. 10, the plurality of cell module assemblies 140 is placed thereon. Also in this step, the cell module assemblies 140 may be electrically connected. One side 144 of the cell module assemblies 140 of the lower layer and one side of the cell module assemblies 140 newly disposed on the tray 130 may be connected to connect the battery module 150 of the lower layer and the battery module 150 of the second layer. One side of another cell module assemblies 140 of the second layer may be connected to the cell module assemblies of the upper layer.

Subsequently, the steps S4, S2 and S3 repeat in that order as many times necessary.

Subsequently, when the assembly of other structure such as cooling related component or the BMS 180 is completed, and the pack case 300 is assembled, the manufacture of the battery pack 100 may be completed.

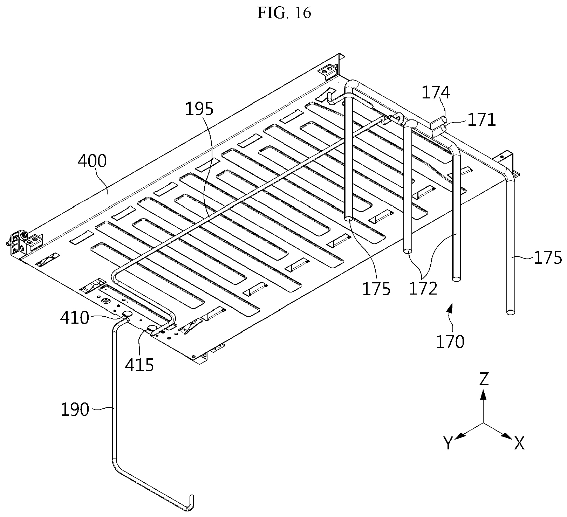

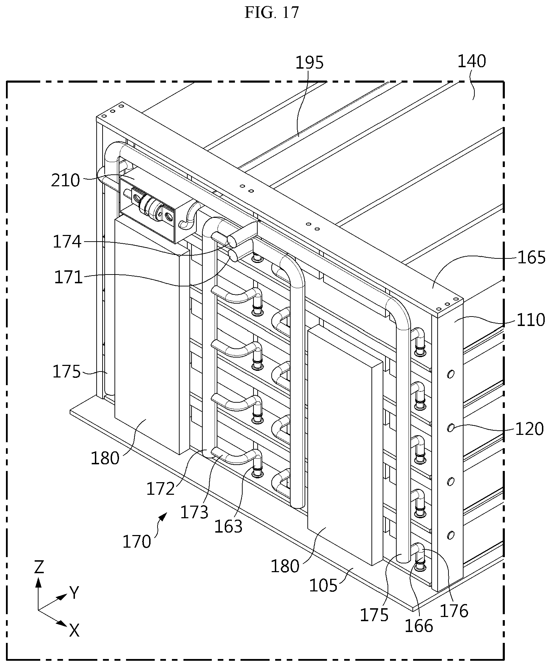

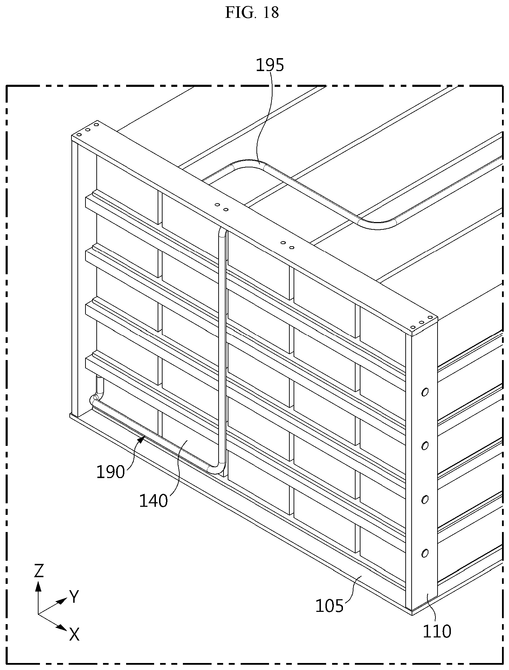

FIG. 15 is an exploded perspective view of another internal structure that is coupled to FIG. 6, and FIG. 16 is an exploded bottom perspective view of the top cover in FIG. 15. FIG. 17 is a front enlarged view of FIG. 6, and FIG. 18 is a rear enlarged view of FIG. 6.

Referring to FIGs. 15 to 18, the battery pack 100 may further include the cooling pipe assembly 170 to supply the cooling medium to each heat sink 160 and collect the cooling medium from each heat sink 160.

As mentioned above, the cooling pipe assembly 170 may be located at the front end of the battery pack 100 to increase space utilization.

The cooling pipe assembly 170 may include the cooling medium inlet port 171 for feeding the cooling medium from the outside of the battery pack 100, a cooling medium feed pipe 172 connected to the cooling medium inlet port 171 and the inlet-side connector 173 for connecting the cooling medium feed pipe 172 to the inlet port 163 of each heat sink 160. Additionally, the cooling pipe assembly 170 may include the cooling medium outlet port 174 for discharging the cooling medium to the outside of the battery pack 100, a cooling medium discharge pipe 175 connected to the cooling medium outlet port 174 and the outlet-side connector 176 for connecting the cooling medium discharge pipe 175 to the outlet port 166 of each heat sink 160.

The cooling medium inlet port 171 and the cooling medium outlet port 174 may be located at the top center of the front end of the battery pack 100 in the length direction. As shown in FIG. 4, the cooling medium inlet port 171 and the cooling medium outlet port 174 may be exposed to the outside of the pack case 300. The cooling medium inlet port 171 and the cooling medium feed pipe 172 are used to feed the cooling medium into the heat sink 160 at the approximately central portion of the battery pack 100. The cooling medium feed pipe 172 may be branched into two from one cooling medium inlet port 171, and connected to each heat sink 160. Usually, heat accumulate at the central portion of the battery pack 100 which in turn, is likely to be heated to high temperature, so the cooling medium of low temperature is preferably concentrated on the central portion of the battery pack 100 to achieve cooling. The cooling medium from each heat sink 160 may be fed from the outlet port 166 at two sides of the heat sink 160 to the cooling medium discharge pipe 175 through the outlet-side connector 176, and the cooling medium discharge pipes 175 at two sides may be connected together to one cooling medium outlet port 174, to smoothly discharge the cooling medium to the outside of the battery pack 100.

Inside of the pack case 300, the BMS 180 may be further included between the cooling medium feed pipe 172 and the cooling medium discharge pipe 175. The BMS 180 may be configured to measure the current and temperature of the battery cells in the battery pack 100, and control the charge/discharge of the battery cells. The BMS 180 may be disposed between the cooling medium feed pipe 172 and the cooling medium discharge pipe 175, thereby maximizing space utilization in the battery pack 100.

The trays 130 and the heat sinks 160 may be extended to the front end of the battery pack 100 further than the cell module assemblies 140, and the inlet port 163 and the outlet port 166 may be located at the extended part of the heat sinks 160. The cooling pipe assembly 170 may be assembled to the inlet port 163 and the outlet port 166 at this location, thereby forming a compact structure without occupying a large space inside the battery pack 100. Additionally, the BMS 180 may be disposed in the empty space between the cooling medium feed pipe 172 and the cooling medium discharge pipe 175, thereby improving energy density of the battery pack 100. Other electrical component such as the fuse assembly 210 may be disposed at the front end of the battery pack 100 adjacent to the BMS 180.

Additionally, the cell module assemblies 140 may be connected with electrical connection members 190, 195. The electrical connection members 190, 195 may be a cable or a flexible busbar.

For example, at the rear end of the battery pack 100, the first electrical connection member 190 extended from the cell module assemblies 140 of the lowest layer may be connected to a first terminal portion 410 of the top cover 400, and at the front end of the battery pack 100 in the length direction, the second electrical connection member 195 extended from the cell module assemblies 140 of the uppermost layer may be extended below the top cover 400 and connected to a second terminal portion 415 of the top cover 400.

Additionally, the fuse assembly 210 may be, for example, connected to the second electrical connection member 195. The fuse assembly 210 is a component including a relay and a resistor, and may play a role in stably supplying or shutting off the battery power to a device or equipment using the battery pack 100 or protecting an electrical grid of the corresponding device or equipment when fault current occurs. According to the present invention, the fuse assembly 210 may be efficiently disposed in the available space at the front end of the battery pack 100, thereby achieving space savings.

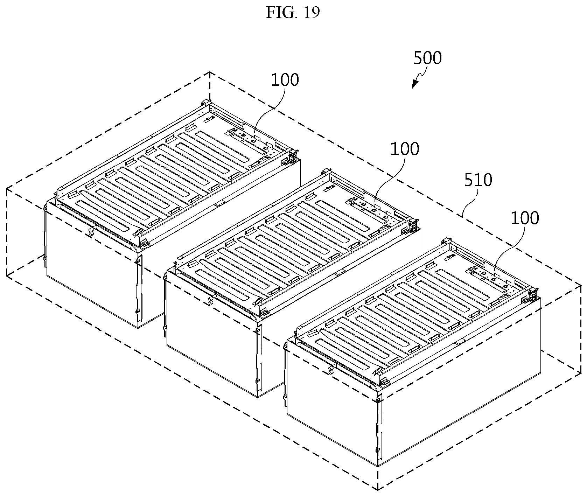

FIG. 19 is a diagram illustrating an energy storage system according to an embodiment of the present invention.

Referring to FIG. 19, the energy storage system 500 may include at least one battery pack 100 according to an embodiment of the present invention.

The battery pack 100 may include at least one battery pack or more than one battery pack. Hereinafter, this embodiment will be described based on a plurality of battery packs 100.

When the energy storage system 500 includes the plurality of battery packs 100, the energy storage system 500 may further include a frame 510. The bracket 310 as described with reference to FIG. 4 may be used to connect the battery pack 100 to the frame 510.

The frame 510 may be configured to accommodate the plurality of battery packs 100, and have an accommodation space for accommodating the plurality of battery packs 100.

The plurality of battery packs 100 may be electrically connected to each other through a rack busbar (not shown). The energy storage system 500 according to the present invention may be embodied in various forms, for example, a smart grid system or an electric charging station.

According to the present invention, the battery modules 150 are already densely arranged in multiple layers inside the battery pack 100. Accordingly, it is easy to design the energy storage system 500 by arranging or stacking the battery packs 100. Compared to the high density design of the conventional battery rack, it may be possible to minimize the assembly process.

The energy storage system 500 may be finished after the battery packs 100 are assembled in the frame 510, then unloaded, transported and installed at the installation site. The frame 510 and the battery pack 100 may be transported and assembled at the installation site.

The trends of ESS move towards minimizing the on-the-spot task. Accordingly, it is necessary to mount the battery packs in the rack case before unloading. However, a transportable rack system is required to prevent deformation and damage to components due to vibration during transportation.

According to the present invention, the internal structure of the battery pack 100 may be stably supported by the post 110, the trays 130 and the pack case 300. Accordingly, the movement of the internal structure such as the cell module assemblies 140 in the battery pack 100 may be minimized, and the influence on transportation (vibration) may be reduced. When installing the energy storage system 500 at the installation site after the transportation of the battery pack 100, the installation operation may be performed fast in an easy and simple way. Because the battery modules 150 are densely arranged in the battery pack 100, the energy storage system 500 may be efficiently built in a short time. As described above, because the battery pack 100 of the present invention is simple and easy to transport and assemble at the installation site, it may be possible to achieve the energy storage system 500 at a low cost in a straightforward and convenient way without needing to convert to a transportable rack system.

The terms indicating directions such as upper, lower, left, right, front and rear are used for convenience of description, but it is obvious to those skilled in the art that the terms may change depending on the position of the stated element or an observer.

Although the present invention has been hereinabove described with regard to a limited number of embodiments and drawings, the present invention is not limited thereto. The scope of protection is defined by the appended claims.

### [List of Reference Numerals]

| | | | |
|---|---|---|---|
| 100: | Battery pack | 105: | Base plate |
| 110: | Post | 115: | Hole |
| 120: | Steel bar | 130: | Tray |
| 136: | Recessed groove | 140: | Cell module assembly |
| 150: | Battery module | 160: | Heat sink |
| 165: | Top frame | 170: | Cooling pipe assembly |
| 171: | Cooling medium inlet port | 172: | Cooling medium feed pipe |
| 173: | Inlet-side connector | 174: | Cooling medium outlet port |
| 175: | Cooling medium discharge pipe | 176: | Outlet-side connector |
| 180: | BMS | 190, 195: | Electrical connection member |
| 200: | Internal structure | 300: | Pack case |
| 310: | Bracket | 400: | Top cover |
| 410: | First terminal portion | 415: | Second terminal portion |
| 500: | Energy storage system | 510: | Frame |

## Claims

1. A battery pack (100) comprising:
a base plate (105) that forms a bottom;
a plurality of posts (110);
a plurality of steel bars (120) connecting the posts (110) facing each other among the plurality of posts (110) and assembled in multiple layers along a height direction of the posts (110), wherein the plurality of posts (110) is assembled to the base plate (105), wherein the posts (110) are assembled to at least four corners of the base plate (105), and the steel bars (120) connect the posts (110) facing each other in a width direction of the battery pack (100) and are arranged along a length direction of the battery pack (100), and wherein the posts (110) have holes (115) at a predetermined interval along the height direction of the posts (110), and the steel bars (120) are inserted into the holes (115) and assembled between the posts (110) facing each other;
a plurality of trays (130) situated on the steel bars (120) to form each layer; and
a plurality of cell module assemblies (140) situated on the tray (130) of each layer.

2. The battery pack (100) according to claim 1, wherein the plurality of cell module assemblies (140) situated on the tray (130) of each layer is connected to form one battery module (150), and the battery pack (100) further comprises an electrical connection member connecting the battery module (150) of each layer.

3. The battery pack (100) according to claim 2, wherein the battery modules (150) are not covered with a module case, and the battery pack (100) further comprises a pack case (300) to protect an internal structure (200), and
wherein the pack case (300) includes a box-shaped container having an open top side.

4. The battery pack (100) according to claim 1, wherein the trays (130) include an upper surface (132) and a sidewall (134) extended downward from the upper surface (132), and the sidewall (134) has a recessed groove (136) to fit downward to the steel bars (120).

5. The battery pack (100) according to claim 1, wherein the posts (110) are included in n rows and m columns along a width direction and a length direction of the battery pack (100), the steel bars (120) are assembled between the posts (110) in a same column, and a bar-type top frame (165) of a rectangular cross section is fastened to a top of the posts (110) in parallel to the steel bars (120).

6. The battery pack (100) according to claim 1, further comprising:
a heat sink (160) between the trays (130) and the cell module assemblies (140) for each layer.

7. The battery pack (100) according to claim 6, wherein the battery pack (100) further comprises a cooling pipe assembly (170) to supply a cooling medium to each heatsink (160) and collect the cooling medium from each heatsink (160), and
wherein the cooling pipe assembly (170) is located at a front end of the battery pack (100) in a length direction.

8. The battery pack (100) according to claim 7, wherein the cooling pipe assembly (170) includes a cooling medium inlet port (171) for feeding the cooling medium from outside of the battery pack (100), a cooling medium feed pipe (172) connected to the cooling medium inlet port (171), an inlet-side connector (173) connecting the cooling medium feed pipe (172) to each heatsink (160), a cooling medium outlet port (174) for discharging the cooling medium to outside of the battery pack (100), a cooling medium discharge pipe (175) connected to the cooling medium outlet port (174) and an outlet-side connector (176) connecting the cooling medium discharge pipe (175) to each heatsink (160).

9. The battery pack (100) according to claim 8, wherein the cooling medium inlet port (171) and the cooling medium outlet port (174) is located at a top center of the front end of the battery pack (100) in the length direction, and the battery pack (100) further comprises a Battery Management System (180), BMS, between the cooling medium feed pipe (172) and the cooling medium discharge pipe (175).

10. The battery pack (100) according to claim 9, wherein the trays (130) and the heatsinks (160) are extended to the front end of the battery pack (100) in the length direction further than the cell module assemblies (140), and the inlet-side connector (173) and the outlet-side connector (176) are located at the extended part of the heatsinks (160).

11. The battery pack (100) according to claim 5, wherein the battery pack (100) further comprises a top cover (400) covering the cell module assemblies (140) of an uppermost layer on the top frame (165).

12. The battery pack (100) according to claim 11, wherein at a rear end of the battery pack (100) in the length direction, a first electrical connection member (190) extended from the cell module assemblies (140) of a lowest layer is connected to a first terminal portion (410) of the top cover (400), and at the front end of the battery pack (100) in the length direction, a second electrical connection member (195) extended from the cell module assemblies (140) of the uppermost layer is extended below the top cover (400) and connected to a second terminal portion (415) of the top cover (400).

## Patentansprüche

1. Batteriepack (100), umfassend:
eine Grundplatte (105), die einen Boden bildet;
eine Mehrzahl von Pfosten (110);
eine Mehrzahl von Stahlstäben (120), die einander gegenüberliegende Pfosten (110) aus der Mehrzahl von Pfosten (110) verbinden und in mehreren Schichten entlang einer Höhenrichtung der Pfosten (110) montiert sind, wobei die Mehrzahl von Pfosten (110) an der Grundplatte (105) montiert ist, wobei die Pfosten (110) an mindestens vier Ecken der Grundplatte (105) montiert sind und die Stahlstäbe (120) die einander gegenüberliegenden Pfosten (110) in einer Breitenrichtung des Batteriepacks (100) verbinden und entlang einer Längsrichtung des Batteriepacks (100) angeordnet sind, und wobei die Pfosten (110) in vorbestimmten Abständen entlang der Höhenrichtung der Pfosten (110) Löcher (115) aufweisen und die Stahlstäbe (120) in die Löcher (115) eingesetzt und zwischen den einander gegenüberliegenden Pfosten (110) montiert sind;
eine Mehrzahl von Schalen (130), die auf den Stahlstäben (120) angeordnet sind, um jede Schicht zu bilden; und
eine Mehrzahl von Zellmodulbaugruppen (140), die auf der Schale (130) jeder Schicht angeordnet sind.

2. Batteriepack (100) nach Anspruch 1, wobei die Mehrzahl von Zellmodulbaugruppen (140), die auf der Schale (130) jeder Schicht angeordnet ist, miteinander verbunden ist, um ein Batteriemodul (150) zu bilden, und der Batteriepack (100) ferner ein elektrisches Verbindungselement umfasst, das die Batteriemodule (150) der jeweiligen Schichten miteinander verbindet.

3. Batteriepack (100) nach Anspruch 2, wobei die Batteriemodule (150) nicht mit einem Modulgehäuse abgedeckt sind und der Batteriepack (100) ferner ein Packgehäuse (300) zum Schutz einer Innenstruktur (200) umfasst, und wobei das Packgehäuse (300) einen kastenförmigen Behälter mit einer offenen Oberseite umfasst.

4. Batteriepack (100) nach Anspruch 1, wobei die Schalen (130) eine obere Fläche (132) und eine sich von der oberen Fläche (132) nach unten erstreckende Seitenwand (134) umfassen und die Seitenwand (134) eine vertiefte Nut (136) zum nach unten gerichteten Einpassen auf die Stahlstäbe (120) aufweist.

5. Batteriepack (100) nach Anspruch 1, wobei die Pfosten (110) entlang einer Breitenrichtung und einer Längsrichtung des Batteriepacks (100) in n Reihen und m Spalten angeordnet sind, die Stahlstäbe (120) zwischen den Pfosten (110) in derselben Spalte montiert sind und ein stabförmiger oberer Rahmen (165) mit einem rechteckigen Querschnitt parallel zu den Stahlstäben (120) an einer Oberseite der Pfosten (110) befestigt ist.

6. Batteriepack (100) nach Anspruch 1, ferner umfassend:
einen Kühlkörper (160) zwischen den Schalen (130) und den Zellmodulbaugruppen (140) für jede Schicht.

7. Batteriepack (100) nach Anspruch 6, wobei der Batteriepack (100) ferner eine Kühlrohrbaugruppe (170) umfasst, um jedem Kühlkörper (160) ein Kühlmedium zuzuführen und das Kühlmedium von jedem Kühlkörper (160) zu sammeln, und wobei die Kühlrohrbaugruppe (170) in Längsrichtung an einem vorderen Ende des Batteriepacks (100) angeordnet ist.

8. Batteriepack (100) nach Anspruch 7, wobei die Kühlrohrbaugruppe (170) einen Kühlmedium-Einlassanschluss (171) zum Zuführen des Kühlmediums von außerhalb des Batteriepacks (100), ein mit dem Kühlmedium-Einlassanschluss (171) verbundenes Kühlmedium-Zuführrohr (172), einen einlassseitigen Verbinder (173), der das Kühlmedium-Zuführrohr (172) mit jedem Kühlkörper (160) verbindet, einen Kühlmedium-Auslassanschluss (174) zum Abführen des Kühlmediums nach außerhalb des Batteriepacks (100), ein mit dem Kühlmedium-Auslassanschluss (174) verbundenes Kühlmedium-Abführrohr (175) und einen auslassseitigen Verbinder (176), der das Kühlmedium-Abführrohr (175) mit jedem Kühlkörper (160) verbindet, umfasst.

9. Batteriepack (100) nach Anspruch 8, wobei der Kühlmedium-Einlassanschluss (171) und der Kühlmedium-Auslassanschluss (174) oben mittig an dem vorderen Ende des Batteriepacks (100) in Längsrichtung angeordnet sind und der Batteriepack (100) ferner ein Batteriemanagementsystem (180), BMS, zwischen dem Kühlmedium-Zuführrohr (172) und dem Kühlmedium-Abführrohr (175) umfasst.

10. Batteriepack (100) nach Anspruch 9, wobei sich die Schalen (130) und die Kühlkörper (160) in Längsrichtung weiter als die Zellmodulbaugruppen (140) bis zu dem vorderen Ende des Batteriepacks (100) erstrecken und der einlassseitige Verbinder (173) und der auslassseitige Verbinder (176) an dem verlängerten Abschnitt der Kühlkörper (160) angeordnet sind.

11. Batteriepack (100) nach Anspruch 5, wobei der Batteriepack (100) ferner eine obere Abdeckung (400) umfasst, welche die Zellmodulbaugruppen (140) einer obersten Schicht auf dem oberen Rahmen (165) abdeckt.

12. Batteriepack (100) nach Anspruch 11, wobei an einem hinteren Ende des Batteriepacks (100) in Längsrichtung ein erstes elektrisches Verbindungselement (190), das sich von den Zellmodulbaugruppen (140) einer untersten Schicht aus erstreckt, mit einem ersten Anschlussabschnitt (410) der oberen Abdeckung (400) verbunden ist, und wobei an dem vorderen Ende des Batteriepacks (100) in Längsrichtung ein zweites elektrisches Verbindungselement (195), das sich von den Zellmodulbaugruppen (140) der obersten Schicht aus unterhalb der oberen Abdeckung (400) erstreckt, mit einem zweiten Anschlussabschnitt (415) der oberen Abdeckung (400) verbunden ist.

## Revendications

1. Bloc-batterie (100), comprenant :
une plaque de base (105) qui forme un fond ;
une pluralité de montants (110) ;
une pluralité de barres d'acier (120) reliant des montants (110) se faisant face parmi la pluralité de montants (110), et assemblées en plusieurs couches dans le sens de la hauteur des montants (110), où la pluralité de montants (110) est assemblée à la plaque de base (105), les montants (110) sont assemblés à au moins quatre coins de la plaque de base (105), et les barres d'acier (120) relient les montants (110) se faisant face dans le sens de la largeur du bloc-batterie (100) et sont disposées dans le sens de la longueur du bloc-batterie (100), et où les montants (110) présentent des trous (115) à intervalle prédéterminé dans le sens de la hauteur des montants (110), et les barres d'acier (120) sont insérées dans les trous (115) et assemblées entre les montants (110) se faisant face ;
une pluralité de plateaux (130) disposés sur les barres d'acier (120) pour former chaque couche ; et
une pluralité d'ensembles de modules cellulaires (140) disposés sur le plateau (130) de chaque couche.

2. Bloc-batterie (100) selon la revendication 1, où la pluralité d'ensembles de modules cellulaires (140) disposés sur le plateau (130) de chaque couche sont raccordés de manière à former un module de batterie (150), et le bloc-batterie (100) comprend en outre un élément de connexion électrique connectant le module de batterie (150) de chaque couche.

3. Bloc-batterie (100) selon la revendication 2, où les modules de batterie (150) ne sont pas recouverts par un boîtier de module, et le bloc-batterie (100) comprend en outre un boîtier de bloc (300) pour protéger une structure intérieure (200), et où
le boîtier de bloc (300) présente un conteneur en forme de boîtier ayant une face supérieure ouverte.

4. Bloc-batterie (100) selon la revendication 1, où les plateaux (130) présentent une surface supérieure (132) et une paroi latérale (134) s'étendant vers le bas à partir de la surface supérieure (132), et la paroi latérale (134) a une rainure ménagée (136) de manière à s'ajuster vers le bas avec les barres d'acier (120).

5. Bloc-batterie (100) selon la revendication 1, où les montants (110) sont compris dans n rangées et m colonnes dans le sens de la largeur et le sens de la longueur du bloc-batterie (100), les barres en acier (120) étant assemblées entre les montants (110) dans une même colonne, et un cadre supérieur de type barre (165) à section transversale rectangulaire est fixé au sommet des montants (110) parallèlement aux barres d'acier (120).

6. Bloc-batterie (100) selon la revendication 1, comprenant en outre :
un dissipateur thermique (160) entre les plateaux (130) et les ensembles de modules cellulaires (140) pour chaque couche.

7. Bloc-batterie (100) selon la revendication 6, où ledit bloc-batterie (100) comprend en outre un ensemble de conduite de refroidissement (170) pour refouler un fluide de refroidissement vers chaque dissipateur thermique (160) et recueillir le fluide de refroidissement de chaque dissipateur thermique (160), et où
l'ensemble de conduite de refroidissement (170) est disposé à une extrémité avant du bloc-batterie (100) dans le sens de la longueur.

8. Bloc-batterie (100) selon la revendication 7, où l'ensemble de conduite de refroidissement (170) présente un orifice d'entrée de fluide de refroidissement (171) pour refouler le fluide de refroidissement depuis l'extérieur du bloc-batterie (100), une conduite d'alimentation en fluide de refroidissement (172) reliée à l'orifice d'entrée de fluide de refroidissement (171), un raccord côté entrée (173) reliant le tuyau d'alimentation en fluide de refroidissement (172) à chaque puits thermique (160), un orifice de sortie de fluide de refroidissement (174) pour refouler le fluide de refroidissement vers l'extérieur du bloc-batterie (100), une conduite de refoulement de fluide de refroidissement (175) reliée à l'orifice de sortie de fluide de refroidissement (174) et un raccord côté sortie (176) reliant la conduite de refoulement de fluide de refroidissement (175) à chaque puits thermique (160).

9. Bloc-batterie (100) selon la revendication 8, où l'orifice d'entrée de fluide de refroidissement (171) et l'orifice de sortie de fluide de refroidissement (174) sont disposés au centre supérieur à l'extrémité avant du bloc-batterie (100) dans le sens de la longueur, et où le bloc-batterie (100) comprend en outre un système de gestion de batterie (180), BMS, entre la conduite d'alimentation en fluide de refroidissement (172) et la conduite de refoulement de fluide de refroidissement (175).

10. Bloc-batterie (100) selon la revendication 9, où les plateaux (130) et les dissipateurs thermiques (160) s'étendent jusqu'à l'extrémité avant du bloc-batterie (100) dans le sens de la longueur au-delà des ensembles de modules cellulaires (140), et où le raccord côté entrée (173) et le raccord côté sortie (176) sont disposés dans la partie étendue des puits thermiques (160).

11. Bloc-batterie (100) selon la revendication 5, où ledit bloc-batterie (100) comprend en outre un couvercle supérieur (400) recouvrant les ensembles de modules cellulaires (140) d'une couche supérieure sur le cadre supérieur (165).

12. Bloc-batterie (100) selon la revendication 11, où, à une extrémité arrière dudit bloc-batterie (100) dans la direction de la longueur, un premier élément de connexion électrique (190) s'étendant depuis les ensembles de modules cellulaires (140) d'une couche inférieure est connecté à une première partie de borne (410) du couvercle supérieur (400), et où, à l'extrémité avant du bloc-batterie (100) dans le sens de la longueur, un deuxième élément de connexion électrique (195) s'étendant depuis les ensembles de modules cellulaires (140) de la couche supérieure est étendu sous le couvercle supérieur (400) et connecté à une deuxième partie de borne (415) du couvercle supérieur (400).
